# FASCICULE DE BREVET EUROPEEN

(11) **EP 3 397 394 B1**
(45) Date de publication et mention de la délivrance du brevet: **19.06.2019**
(21) Numéro de dépôt: 16829101.1
(22) Date de dépôt: 31.12.2016
(51) Int. Cl.: B05B 7/22, B05B 12/08, B05B 15/18, B05B 15/14, B22F 3/105, B33Y 30/00

(54) **DISPOSITIF DE FABRICATION ADDITIVE PAR PROJECTION ET FUSION DE POUDRE**
VORRICHTUNG FÜR ADDITIVE FERTIGUNG DURCH EINSPRITZEN VOM VERSCHMELZTEN PULVER
APPARATUS FOR ADDITIVE MANUFACTURING USING MOLTEN POWDER SPRAYING

(30) Priorité: 31.12.2015 FR 1502753
(43) Date de publication de la demande: 07.11.2018
(73) Titulaire: Ecole Centrale De Nantes, 44300 Nantes (FR)
(72) Inventeur: HASCOET, Jean-Yves, 44300 Nantes (FR); CARABIN, Gilles, 49230 Germain ST Moine (FR)
(74) Mandataire: Ipside
(86) Numéro de dépôt international: PCT/EP2016/082950
(87) Numéro de publication internationale: WO 2017/114964

(56) Documents cités:
- WO-A1-93/00171
- FR-A1- 2 685 922
- FR-A1- 2 971 723
- US-A- 5 477 026

## Description

L'invention concerne un dispositif de fabrication additive par projection et fusion de poudre. L'invention concerne plus particulièrement une buse pour la projection et la fusion par laser d'une poudre métallique pour la mise en oeuvre du procédé dit CLAD® acronyme de « Construction Laser Additive Directe ». Le procédé CLAD® est un procédé de fabrication additive par dépôt, utilisant la projection / fusion d'une poudre constituée du matériau déposé, la fusion dudit matériau déposé étant réalisée par un laser précisément au point de dépôt de ladite poudre.

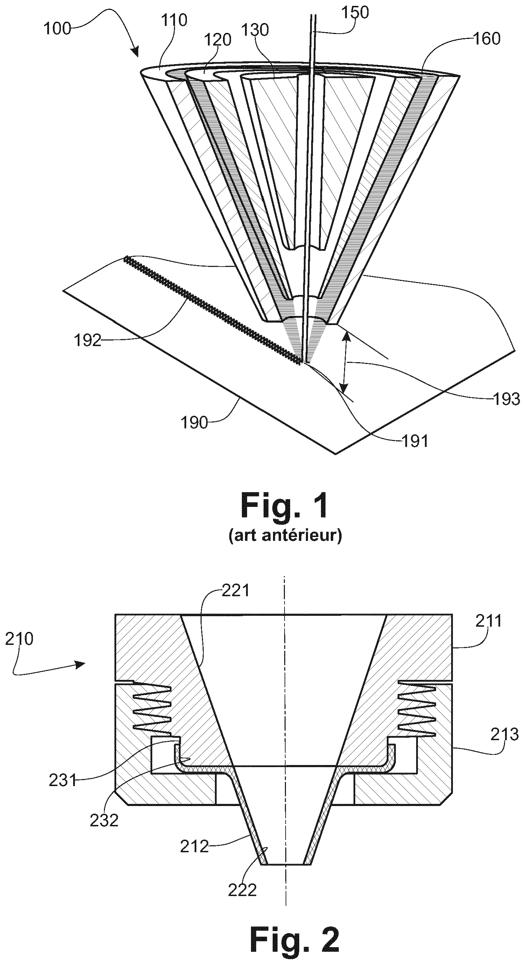

La figure 1, relative à l'art antérieur, montre schématiquement un exemple de réalisation de ce procédé. La buse (100) de projection / fusion de la poudre consiste en 3 cônes concentriques délimitant entre leurs parois des espaces annulaires coniques également concentriques. Un laser (150) transverse le cône intérieur (130) par un alésage centré sur l'axe dudit cône. Le laser est focalisé sur le point (191) où le dépôt (192) de matière est réalisé sur la pièce (190) en cours de fabrication. De la poudre (160) est projetée dans l'espace annulaire conique compris entre la surface intérieure du cône (110) extérieur et la surface extérieure d'un cône (120) intermédiaire, alors qu'un gaz est soufflé dans l'espace annulaire conique compris entre la surface intérieure dudit cône (120) intermédiaire et la surface extérieure du cône (130) intérieur. Le centrage des cônes (110, 120, 130) les uns par rapport aux autres et le réglage des paramètres font que la poudre est projetée selon un jet conique creux dont le sommet est, dans l'idéal, confondu avec le point de focalisation (191) du laser (150). La distance (193) entre le point (191) de dépôt de la matière et l'extrémité avant du cône (110) extérieur est couramment de l'ordre de 5 mm. Cette faible distance, accroît les risques de collision entre le cône et la pièce ou des éléments de l'environnement de fabrication tels que la table de la machine ou des moyens de bridage, particulièrement lorsque l'opération de fabrication additive est réalisée selon des trajectoire mettant en oeuvre 5 axes de déplacement. Dans certaines circonstances également, des amas de poudre se créent à la sortie de l'espace annulaire compris entre le cône (110) extérieur et le cône (120) intermédiaire et modifient la forme du jet de poudre, conduisant à des conditions de dépôt dégradées. Ces conditions nécessitent de remplacer le cône (110) extérieur.

Ces opérations de réparation selon l'art antérieur sont coûteuses car elles nécessitent le remplacement de l'ensemble du cône extérieur, pièce de précision, souvent réalisée elle-même dans un matériau coûteux tel que du cuivre, alors que seule l'extrémité de cette pièce et dégradée. De plus l'opération est relativement longue, conduisant à l'immobilisation de la machine et l'occupation d'un technicien qualifié pendant toute sa durée.

Le document FR 2 971 723 décrit une tête de découpe par laser ou plasma, comprenant un corps et une buse, et comportant un élément fragile entre le corps et la buse, susceptible de se rompre en cas de choc et ainsi de préserver le corps.

L'invention vise à résoudre les inconvénients de l'art antérieur et concerne à cette fin une buse selon la revendication 1.

Ainsi, la seconde partie du premier cône est interchangeable et facilement remplacée en cas de dégradation de celle-ci.

L'invention est avantageusement mise en oeuvre selon les modes de réalisation et les variantes exposés ci-après, lesquels sont à considérer individuellement ou selon toute combinaison techniquement opérante.

Selon l'invention, le cône extérieur comprend une bague comportant un alésage conique intérieur et un centreur externe coaxial avec ledit alésage conique, la deuxième partie du cône extérieur étant centrée sur ledit centreur. Ceci assure un centrage parfait, sans nécessité de réglage, de la seconde partie du cône extérieur par rapport à la première partie dudit cône.

Selon un mode de réalisation de la buse objet de l'invention, la première et la deuxième partie du cône extérieur sont constituées de matériaux différents. Ainsi, les matériaux sont optimisés pour répondre aux fonctions principales de ces deux parties.

Selon un mode de réalisation particulier, l'alésage conique intérieur de la deuxième partie du cône extérieur est d'une conicité différente de celle de l'alésage conique de la première partie. Ce mode de réalisation permet de varier la forme du jet et notamment la distance de focalisation du jet par rapport à l'extrémité de la buse.

Selon l'invention, la deuxième partie du cône extérieur comprend une partie fusible apte à se rompre ou à se déforme sous un effort déterminé. Ainsi, en cas de collision avec la pièce, l'effort est déterminé de sorte que la pièce en cours de réalisation ne soit pas endommagée. Alternativement la partie fusible est dimensionnée pour se rompre avant que sa déformation n'endommage le cône intermédiaire.

Avantageusement, la buse objet de l'invention comprend des moyens de détection de rupture de la partie fusible du cône extérieur. Ainsi, en cas de collision sévère, la rupture du cône est détectée et la fabrication additive est interrompue de sorte à ne pas dégrader de manière irrémédiable la qualité de la pièce en cours de réalisation.

L'invention est exposée ci-après selon ses modes de réalisation préférés, nullement limitatifs, et en référence aux figures 1 et 2, dans lesquelles :
- la figure 1, relative à l'art antérieur, montre selon une vue de principe en perspective et en coupe les 3 cônes utilisés dans le procédé CLAD® ;
- et la figure 2 montre selon une vue de face et la même coupe que la figure 1, un exemple de réalisation du cône extérieur de la buse de projection objet de l'invention.

Figure 2, selon un exemple de réalisation le cône (210) extérieur de la buse objet de l'invention est réalisé en deux parties (211, 212). Selon cet exemple de réalisation, la première partie (211) du cône (210) extérieur est constituée d'un acier apte à résister à l'action abrasive de la poudre projetée au cours du procédé de fabrication additive. Cette première partie, sous la forme d'une bague, comprend un alésage (221) conique selon une première conicité, et se termine par une portion (231) de centrage. Selon cet exemple de réalisation ladite portion (231) est une portion mâle cylindrique. Alternativement cette portion de centrage est constituée par un lamage cylindrique ou conique à l'extrémité de ladite première partie (211). La seconde (212) partie du premier cône comprend une portion (232) de centrage, apte à coopérer avec la portion (231) de centrage de la première partie. La deuxième partie comprend un alésage (222) conique, qui selon cet exemple de réalisation, est de la même conicité que l'alésage (221) conique de la première partie qu'elle prolonge. Les moyens de centrage (231, 232) des deux parties (211, 212) assurent la coaxialité des deux alésages coniques. Selon une variante de réalisation (non représentée), la conicité des deux alésages (221, 222) est significativement différente, de sorte, par exemple, à modifier la forme du jet et son point de focalisation en sortie de la buse.

Selon cet exemple de réalisation, la seconde (212) partie du cône extérieur est constituée de cuivre de sorte à limiter sa sensibilité au laser dans le cas où le rayon toucherait directement ou par réflexion les parois de ladite deuxième partie. Selon un exemple de réalisation, l'épaisseur de cette deuxième partie est choisie de sorte qu'en cas de collision de cette partie (212) du cône avec la pièce en cours de réalisation ou avec une partie de la machine, ladite partie (212) se déforme sans abîmer la partie antagoniste.

Selon un autre mode de réalisation, non représenté, toute ou partie de la deuxième (212) partie du cône selon l'invention est constituée d'un matériau fragile, par exemple, de la céramique. Ce mode de réalisation permet, le cas échéant, à cette deuxième partie de mieux résister à l'abrasion causée par le passage de la poudre métallique projetée, et d'autre part de se rompre sous un effort déterminé, empêchant ainsi que, par sa déformation excessive, ladite seconde (212) partie n'endommage le cône intermédiaire en cas de collision. Avantageusement, des moyens (non représentés), permettent de détecter une telle rupture de la partie fusible de sorte à arrêter la machine en cas d'une telle collision. Ces moyens sont par exemple constitués par une jauge de déformation fixée sur la partie fusible de la seconde (212) partie du cône ou entre la partie fusible et le reste de ladite seconde partie. Ces moyens sont pré-installés sur ladite seconde partie et comprennent des moyens de connexion électrique à un connecteur sur la broche de la machine de fabrication.

Selon cet exemple de réalisation, la seconde (212) partie du cône (210) extérieur est fixée sur la première (211) partie dudit cône par l'intermédiaire d'un écrou (213) en prise sur une partie filetée cylindrique de la première partie (211) dudit cône. Selon cet exemple de réalisation, la partie filetée est d'un diamètre supérieur au diamètre du centreur (231) mâle de cette première partie. Alternativement, la seconde (212) partie du cône est fixée par une pluralité de vis à l'extrémité de la première partie. Alternativement encore, la seconde partie du cône est visée sur la première partie, par exemple au moyen d'un filetage conique assurant à la fois le centrage et la fixation des deux parties (211, 212) l'une par rapport à l'autre.

La description ci-avant et les exemples de réalisation, montrent que l'invention atteint le but visé, en particulier, elle tire avantage de la construction en deux parties démontables du cône extérieur de la buse, non seulement pour réduire les coûts de remplacement et de réparation de la buse en cas de collision, mais apporte des avantages supplémentaires dans la conduite et dans la sécurité du procédé de fabrication additive par projection de poudre.

## Revendications

1. Buse pour la fabrication additive par projection/fusion de poudre selon un jet conique creux, comprenant :
- un cône extérieur (210),
- un cône intérieur
- et un cône intermédiaire, la poudre étant projetée dans l'espace annulaire conique compris entre la surface intérieure du cône (210) extérieur et la surface extérieure du cône intermédiaire, le cône extérieur comportant une première partie comprenant une bague (211) comportant un alésage (221) conique intérieur et un centreur (231) coaxial avec ledit alésage conique, et une deuxième partie (212) assemblée avec la première partie selon l'axe dudit cône extérieur (210) par des moyens (213) démontables, la deuxième partie (212) étant centrée sur ledit centreur (231), **caractérisé en ce que** la deuxième partie (212) du cône extérieur comprend une partie fusible apte à se rompre ou à se déformer sous un effort déterminé sans endommager la première partie.

2. Buse selon la revendication 1, dans laquelle la première (211) et la deuxième (212) partie du cône extérieur sont constituées de matériaux différents.

3. Buse selon la revendication 1, dans laquelle l'alésage (222) conique intérieur de la deuxième (212) partie du cône extérieur est d'une conicité différente de celle de l'alésage (221) conique de la première (211) partie.

4. Buse selon la revendication 1, comprenant des moyens de détection de rupture de la partie fusible de la deuxième partie.

## Patentansprüche

1. Düse für die additive Fertigung durch Spritzen / Schmelzen von Pulver gemäß einem hohlen, konischen Strahl, umfassend:
- einen Außenkonus (210),
- einen Innenkonus
- und einen Zwischenkonus,
wobei das Pulver in den konischen, ringförmigen Raum gespritzt wird, der zwischen der inneren Oberfläche des Außenkonus (210) und der äußeren Oberfläche des Zwischenkonus umfasst ist, wobei der Außenkonus einen ersten Teil beinhaltet, der einen Ring (211) umfasst, der eine innere, konische Bohrung (221) und eine Zentriervorrichtung (231) beinhaltet, die mit der konischen Bohrung koaxial ist, und einen zweiten Teil (212), der mit dem ersten Teil gemäß der Achse des Außenkonus (210) durch abnehmbare Mittel (213) zusammengefügt ist, wobei der zweite Teil (212) auf der Zentriervorrichtung (231) zentriert ist, **dadurch gekennzeichnet, dass** der zweite Teil (212) des Außenkonus einen schmelzbaren Teil umfasst, der imstande ist, unter einer bestimmten Beanspruchung zu brechen oder sich zu verformen, ohne den ersten Teil zu beschädigen.

2. Düse nach Anspruch 1, wobei der erste (211) und der zweite (212) Teil des Außenkonus aus unterschiedlichen Materialien bestehen.

3. Düse nach Anspruch 1, wobei die innere, konische Bohrung (222) des zweiten (212) Teils des Außenkonus eine Konizität aufweist, die sich von jener der konischen Bohrung (221) des ersten (211) Teils unterscheidet.

4. Düse nach Anspruch 1, umfassend Mittel zum Erkennen eines Bruchs des schmelzbaren Teils des zweiten Teils.

## Claims

1. Nozzle for additive manufacturing via projection/melting of a powder in a hollow conical jet, comprising:
- an outer cone (210),
- an inner cone,
- and an intermediate cone,
the powder being projected into the conical annular space comprised between the inner surface of the outer cone (210) and the outer surface of the intermediate cone, the outer cone comprising a first portion comprising a ring (211) comprising an inner conical bore (221) and a centering device (231) coaxial to said conical bore, and a second portion (212) assembled with the first portion along the axis of said outer cone (210) by detachable means (213), the second portion (212) being centered on said centering device (231), **characterized in that** the second portion (212) of the outer cone comprises a fusible portion capable of breaking or being deformed under a predetermined stress without damaging the first portion.

2. Nozzle according to claim 1, wherein the first (211) and the second (212) portion of the outer cone are made of different materials.

3. Nozzle according to claim 1, wherein the inner conical bore (222) of the second portion (212) of the outer cone has a taper different from that of the conical bore (221) of the first (211) portion.

4. Nozzle according to claim 1, comprising means for detecting rupture of the fusible portion of the second portion.
